# EUROPÄISCHE PATENTSCHRIFT

(11) **EP 2 463 057 B1**
(45) Veröffentlichungstag und Bekanntmachung des Hinweises auf die Patenterteilung: **23.04.2014**
(21) Anmeldenummer: 11401559.7
(22) Anmeldetag: 28.07.2011
(51) Int. Cl.: B24C 7/00, B24C 9/00, B24C 5/04, B24C 1/06, B05B 1/34

(54) **Vorrichtung zum Strahlbearbeiten von Gegenständen bzw. Strahlen von Gegenständen**
Device for blast-machining or abrasive blasting objects
Dispositif de sablage ou de rayonnement d'objets

(30) Priorität: 24.10.2010 DE 102010060135; 03.12.2010 DE 102010060134
(43) Veröffentlichungstag der Anmeldung: 13.06.2012
(73) Patentinhaber: Paul Auer GmbH, 68309 Mannheim (DE)
(72) Erfinder: Hunziker, Werner, 7307 Jenins (CH)
(74) Vertreter: Sartorius, Peter

(56) Entgegenhaltungen:
- EP-A2- 1 882 551
- WO-A2-96/16770
- DE-B3-102005 016 424
- US-A- 3 447 272
- US-A- 5 201 150

## Beschreibung

Die Erfindung betrifft eine Vorrichtung zum Strahlbearbeiten bzw. Strahlen von Gegenständen wie Bauelemente, Werkzeuge, Haushaltsgegenstände, Töpfe, Pfannen oder dergleichen, mit einem Strahlmitteldepot zur Aufnahme eines Strahlmittels, das über mindestens eine Leitung mit einer Strahldüse verbunden ist, die sich in einen Strahlraum erstreckt, in dem die zu bestrahlenden Gegenstände eingebracht werden können.

Aus der DE 10 2005 016 424 B3 ist eine Kabine einer Trocken-Strahlanlage zum Fördern von Strahlmittel bekannt. Das Gehäuse weist ein einen Arbeitsraum bildendes Gehäuseteil, einen das Gehäuseteil nach oben zumindest teilweise verschließenden Deckel und einen das Gehäuseteil nach unten zumindest teilweise verschließenden trichterförmigen Boden zum Auffangen und Sammeln des herabfallenden Strahlmittels auf. Das Strahlmittel kann schnell gewechselt und gleichzeitig das Gehäuse mit einem Druckkessel ausgestattet werden. Hierzu weist der Boden in Bezug auf eine Mittelachse des Gehäuses eine runde oder ovale Querschnittsform mit einer kegelförmigen Mantelfläche auf. Diese Einrichtung betrifft lediglich eine kompakte Lösung für das Trocken-Druckstrahlsystem. Bei dieser Einrichtung befindet sich das Strahlmittel in dem Druckbehälter und wird in der unterhalb angebrachten Mischkammer der unter gleichem Druck stehenden Strahlluft beigemischt. Das Strahlmittel wird nicht durch die Druckluft aus dem Behälter gepresst. Der Gleichdruck erlaubt es, dass das Strahlmittel nach unten mit dem Luftstrom herausrieseln kann.

Sehr feinkörnige, insbesondere mineralische Strahlmittel wie Korund, Siliziumoxid, Glasmehl, Quarzpulver, Glasperlen usw. lassen sich aus verschiedenen Gründen in trockenen Strahl-Verfahren nur sehr bedingt einsetzen. Einerseits hat man mit einem gewaltigen Staubproblem zu kämpfen und andererseits neigen sehr feine Körnungen dazu, auf der Oberfläche festzukleben und verhindern damit eine gute Strahlwirkung.

Es sind auch Verfahren bekannt, bei denen Strahlmittel und Wasser vermischt werden. Dieses Gemisch, auch Slurry bezeichnet, wird mit Hilfe einer Zentrifugalpumpe aufbereitet, mittels einer Pumpe einer Strahlpistole zugeführt und dann mit Hilfe von Druckluft dem Gemisch die nötige Strahlenergie vermittelt, mit der das Gemisch auf die zu bestrahlenden Oberflächen geleitet wird. Da die Feststoffbestandteile in dem Gemisch aus Wasser und Strahlmittel sehr schnell absinken, muss das Gemisch dauernd in Bewegung gehalten werden. In vielen Fällen wird hierzu ein Teil der von der Pumpe beförderten Suspension abgezweigt und in einem besonderen Behälter, der eine Mischeinrichtung aufweist, aufbereitet.

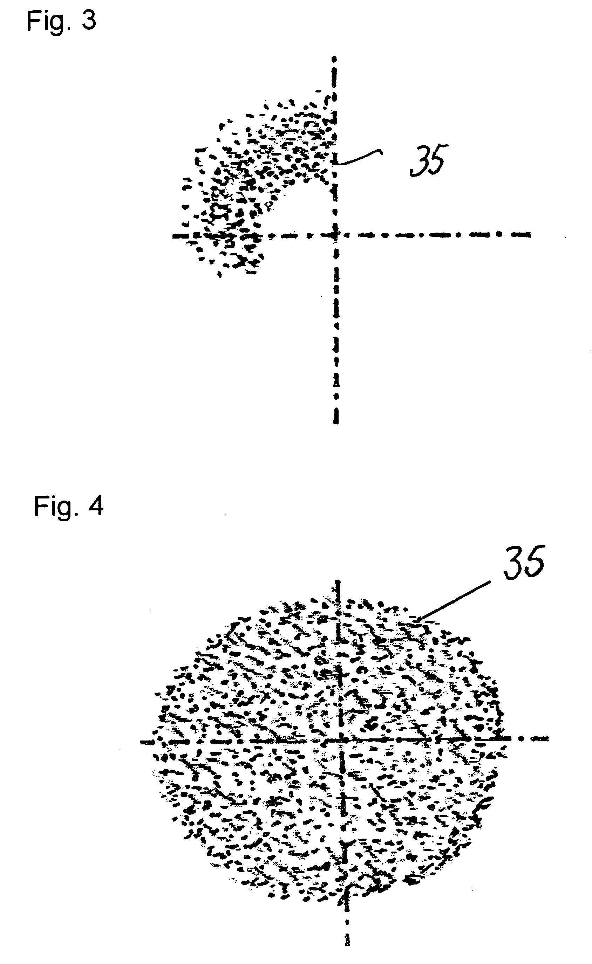

Zentrifugalpumpen unterliegen einem großen Verschleiß. Das Strahlergebnis (Fig. 3) mit den Injektor-Strahlpistolen ist nicht optimal, da nur eine kleine, zentrale Fläche stark und die umgebende Ringfläche bedeutend schwächer bestrahlt wird. Um die Zentrumsfläche zu vergrößern, werden deshalb große Düsen verwendet, was jedoch zu einem großen Druckluft- und somit Energieverbrauch führt.

Versuche mit leistungsstärkeren Pumpen, die einen deutlich höheren Druck aufweisen, um eine Suspension bzw. ein Wasser und Strahlgemisch zu erzeugen und damit die Gegenstände zu bestrahlen, führten zu keinem besseren Ergebnis.

Der Einsatz einer derartigen Pumpe ist schon deshalb sehr nachteilig, da alle dem Verschleiß ausgesetzten Elemente aus Polyurethan gefertigt werden müssten. Je höher der Druck dieser Pumpe ist, desto größer ist auch der Verschleiß und desto geringer der Gesamtwirkungsgrad.

Das schlechte Strahlergebnis liegt insbesondere daran, dass Wasser und Strahlmittel, insbesondere das Granulat, unterschiedlich große Strömungsgeschwindigkeiten aufweisen und diese noch ansteigen, wenn der Förderdruck der Pumpe erhöht wird. Das Strahlergebnis gemäß Fig. 3 kann nicht wesentlich verbessert werden, da das Wasser mit einer wesentlich höheren Geschwindigkeit auf das zu strahlende Gut auftrifft als das Granulat. Dies liegt auch daran, dass der Mischer das Granulat einseitig nach außen in Richtung Leitungswand drückt und das Wasser mit höherer Geschwindigkeit aus der Düse austritt und das Granulat nur punktartig auf eine kleine Fläche des zu bestrahlenden Guts auftrifft.

Eine derartige Vorrichtung ist insbesondere für eine gleichmäßige gute Verteilung des Strahlmittelgemischs in der Förderleitung und im Bereich des Austrittsendes der Strahldüse nicht vorteilhaft. Ferner ist die Herstellung der bekannten Vorrichtung mit einer besonderen Pumpe zur Förderung des Strahlmittelgemischs oder einer Suspension aufwändig und teuer und erfordert einen hohen Energieaufwand.

Ferner ist eine Vorrichtung (US 3,447,272) bekannt zum Strahlbearbeiten bzw. Strahlen von Gegenständen, wie Bauelemente, Werkzeuge, Haushaltsgegenstände, Töpfe, Pfannen oder dergleichen, mit einem als Druckraum ausgebildeten Strahlmitteldepot zur Aufnahme eines Strahlmittels, das über mindestens eine Druckmittelleitung mit einer Strahldüse verbunden ist die sich in einen Strahlraum erstreckt, in dem die zu bestrahlenden Gegenstände eingebracht werden können, wobei Druckluft mit Hilfe einer Druckerzeugungseinrichtung dem Strahlmittel eingegeben wird.

Zur Förderung des Strahlmittels ist die Druckmittelleitung vorgesehen, deren Einlassseite sich im Arbeitsprozess in das im Strahlmitteldepot vorgesehene Strahlmittel erstreckt, auf das die Druckluft wirkt. Das Auslassende der Druckmittelleitung weist eine oder mehrere Strahldüsen auf, die im Strahlraum platziert ist bzw: sind.
Das Strahlmittel mit Hilfe von Druckluft über eine weitere Leitung aus dem Strahlraum in das Strahlmitteldepot zurückgeführt.

Die hierzu vorgesehene Druckluftleitung erstreckt sich aber mit ihrer Auslassöffnung bis in den Bereich des Auslassendes der in der Strahlkammer vorgesehenen Düse und soll in diesem Bereich eine Vermischung oder Verwirbelung des Gemischs erzeugen, was jedoch nicht zu dem gewünschten Effekt führt, mit zusätzlichen Energiekosten verbunden ist und damit das Verfahren insgesamt verteuert.

Der Erfindung liegt die Aufgabe zugrunde eine Vorrichtung zum Strahlbearbeiten bzw. Strahlen von Gegenständen auf einfache und kostengünstige Weise herzustellen, den Energieaufwand zu senken und eine gleichmäßige Verteilung des Strahlmittelgemischs auf der Oberfläche eines zu bestrahlenden Guts bzw. Gegenstandes zu erreichen.

Die Aufgabe wird erfindungsgemäß dadurch gelöst, dass die aus dem Strahlraum und dem Strahlmitteldepot bestehende Anlage als geschlossenes Drucksystem ausgebildet ist, das im Arbeitseinsatz unter einem Arbeitsdruck steht, der zumindest im Arbeitsprozess auf dem Strahlmittel lastet, wobei eine Mischeinrichtung mit Leitelementen im Bereich der Druckmittelleitung der Strahldüse oder in oder vor der Einlassöffnung der Strahldüse vorgesehen ist.

Die Druckluft wird mit Hilfe der Druckerzeugungseinrichtung oberhalb des im Strahlmitteldepot vorgesehenen Strahlgemischs eingegeben sodass am Auslassende der Strahldüse die volle kinetische Energie dem Strahlgut zugeführt wird und damit eine gleichmäßige Strahlung auf die Oberfläche des zu bestrahlenden Guts einwirkt (Fig. 4). Eine gleichmäßige Verteilung des Strahlmittels in der Flüssigkeit ist zur Erzielung einer guten Leistung sehr wichtig.

Mit einer gut durchmischten Suspension erhält man beim Strahlvorgang eine gleichmäßige Oberfläche auf dem Teil der Fläche, der bestrahlt worden ist. Das bei Injektorstrahlen übliche Strahlbild mit einer intensiv gestrahlten Kernzone und einer schwach gestrahlten Ringzone tritt bei dem erfindungsgemäßen Verfahren nicht auf. Das Verfahren erlaubt auch den Einsatz von Düsen, die einen fächerförmigen Strahl erzeugen und damit eine optimale Anpassung an die jeweilige Strahlaufgabe ermöglichen (Fig. 4).

Durch den Mischer wird der Suspensionsfluss mehrfach getrennt und abwechselnd nach links und nach rechts verwirbelt. Hierzu ist es vorteilhaft, wenn im Mischer mindestens drei Mischelemente eingesetzt werden. Diese können zu einem Bausatz zusammengefasst bzw. miteinander verschweißt sein und dann eingebaut werden. Da die Mischelemente einem gewissen Verschleiß unterliegen, ist es vorteilhaft, dass sie leicht auswechselbar sind.

Daher ist es nach einem weiteren Merkmal ferner vorteilhaft, in der erfindungsgemäßen Vorrichtung einen Mischer, der möglichst geringe zentrifugale Kräfte erzeugt, insbesondere einen statischen Mischer oder einen Mischer mit Rührwerk und der Antriebsvorrichtung, vorzusehen. Der im Strahlmitteldepot vorgesehene Mischer lockert das im unteren Behälterbereich des Strahlmitteldepots angesammelt Granulat auf. Eine senkrecht im Druckbehälter angeordnete Transportschnecke kann auch nach längerem Stillstand der Anlage im vollständig abgesetzten Strahlmittel ohne weiteres wieder angefahren werden.

Mit Hilfe der Rückführleitung zum Druckbehälter wird eine gute und dauerhafte Durchmischung erreicht, da diese unterhalb des Minimalniveaus des Strahlgemischs einmündet. Dadurch strömt bei jedem Rückförderzyklus die Suspension in den im Druckbehälter vorhandenen Vorrat und bewirkt ohne den Einsatz von Zentrifugalkraft eine einwandfreie Verwirbelung des Strahlgemischs.

Mit einer gut durchmischten Suspension erhält man beim Strahlvorgang eine gleichmäßige Oberfläche auf dem Teil der Fläche, der bestrahlt worden ist. Das bei Injektorstrahlen übliche Strahlbild mit einer intensiv gestrahlten Kernzone und einer schwach gestrahlten Ringzone tritt bei dem erfindungsgemäßen Verfahren nicht auf. Das Verfahren erlaubt auch den Einsatz von Düsen, die einen fächerförmigen Strahl erzeugen und damit eine optimale Anpassung an die jeweilige Strahlaufgabe ermöglichen.

Da die Druckluft nur zum Herauspressen der Suspension aus den Strahldüsen und zum Rücktransport des Strahl-Gemischs in den Druckbehälter dient und somit nicht am Strahlprozess beteiligt ist, lassen sich mit der erfindungsgemäßen Anlage Energiekosten bis zu 80% einsparen.

Mit Hilfe der erfindungsgemäßen Vorrichtung kann auch auf den bisher üblichen Zentrifugalmischer verzichtet werden, der auch dazu beiträgt, dass die Suspension gleichmäßig durchmischt wird. Da der Energieaufwand zur Erzeugung des in der Vorrichtung erforderlichen Arbeitsdrucks nun über einen externen Kompressor bereitgestellt und damit in die Leitung Luftförderstrom geleitet wird, mit dessen Hilfe die gleichmäßig verteilte Suspension auch bis zum Auslassende der Strahldüse gelangt, kann eine wesentlich größere Arbeitsfläche auf der Oberfläche des zu bestrahlenden Gegenstandes gleichmäßig bearbeitet werden. Selbst bei Verwendung von Strahldüsen mit großer Aufspreizung des Düsenstrahls wird eine gleichmäßige Strahlbearbeitung der Oberfläche sichergestellt.

Mit Hilfe der erfindungsgemäßen Vorrichtung können Gegenstände aufgeraut, abgetragen, entgratet, mattiert, geglättet werden. Hierzu wird eine Suspension aus einer Flüssigkeit und einem mineralischen Strahlmittel eingesetzt. Es können damit Bearbeitungswerkzeuge, Messwerkzeuge, Feinmechanik und auch Gegenstände aus dem Haushalt bearbeitet werden.

Hierdurch erhält man eine sehr gute Durchmischung der Suspension d. h. eine Aufschwemmung der feinstverteilten festen Stoffe, wie Granulat, in einer Flüssigkeit und damit eine wesentlich verbesserte Strahlleistung, d. h., die Oberfläche wird gegenüber den bekannten Strahlmustern wesentlich gleichmäßiger und intensiver behandelt, da die Suspension aufgrund der sehr guten Durchmischung von Flüssigkeit, insbesondere Wasser, und Granulat, auch eine große kinetische Energie aufweist, was bei Trocken-Strahlverfahren so nicht möglich war. Bei Einsatz der erfindungsgemäßen Anlage und des erfindungsgemäßen Verfahrens können bis zu 80% Energiekosten bei größerer Flächenleistung erreicht werden.

Hierzu ist es vorteilhaft, dass die aus dem Strahlraum und zumindest dem Strahlmitteldepot bestehende Anlage als geschlossenes Drucksystem ausgebildet ist, das im Arbeitseinsatz unter einem Arbeitsdruck, insbesondere unter Gas- oder Druckluft, steht, der zumindest im Arbeitsprozess und zumindest im Strahlmitteldepot auf der aus einer Flüssigkeit und einem Strahlmittel gebildeten Suspension und/oder dem Granulat und/oder dem Granulatgemisch lastet und mit Hilfe des Luftstroms eine einwandfreie Verwirbelung des Gemischs herbeiführt, sodass am Auslassende der Strahldüse die volle kinetische Energie dem Strahlgut zugeführt wird und damit eine gleichmäßige Strahlung auf die Oberfläche des zu bestrahlenden Guts einwirkt (Fig. 4).

Eine zusätzliche Möglichkeit ist gemäß einer Weiterbildung der Erfindung, dass die Anlage, insbesondere das Strahlmitteldepot und/oder der Strahlraum, an die Druckerzeugungseinrichtung bzw. Kompressor und/ oder eine Druckluftzufuhrleitung angeschlossen ist, wobei zur Förderung des aus einem Strahlmittel, insbesondere Granulat, gebildeten Granulatgemischs und/oder der Suspension die Druckmittelleitung vorgesehen ist, deren Einlassseite sich im Arbeitsprozess in das im Strahlmitteldepot vorgesehene Granulatgemisch und/oder die Suspension erstreckt, auf die die Druckluft wirkt, wobei das Auslassende der Druckmittelleitung eine oder mehrere Strahldüsen aufweist, die im Strahlraum platziert sind.

Ferner ist es vorteilhaft, dass der Strahlraum in seinem unteren Bereich einen Sammelraum, insbesondere eine oder mehrere Druckschleusen, aufweist, in dem das zur Strahlung verwendete Granulatgemisch aufgefangen wird und in den sich ein Einlassende der Rücklaufleitung erstreckt, die mit dem Strahlmitteldepot in Verbindung steht und deren Auslassende sich im unteren Bereich des Strahlmitteldepots befindet oder sich im Arbeitsprozess unterhalb des Niveaus des im Strahlmitteldepot aufgenommenen Strahlgemischs erstreckt.

Vorteilhaft ist es auch, dass der Strahlraum im unteren Bereich, insbesondere im Bereich der Druckschleusen, einen ersten und zweiten Sensor aufweist, wobei der erste bzw. obere Sensor die zulässige maximale Füllhöhe und der zweite bzw. untere Sensor die minimale untere Befüllgrenze anzeigt, während das Strahlmitteldepot ebenfalls im unteren Bereich einen dritten Sensor und im oberen Bereich einen vierten Sensor aufweist, wobei der vierte bzw. obere Sensor die maximal zulässige Füllhöhe und der dritte bzw. untere Sensor die minimale Befüllgrenze für die Suspension bzw. das Granulatgemisch anzeigt.

Vorteilhaft ist es, dass im Strahlmitteldepot eine Mischeinrichtung, insbesondere ein Rührwerk mit einer Antriebsvorrichtung, vorgesehen ist, das sich bis in den unteren Bereich des Strahlmitteldepots erstreckt, wobei sich der untere Bereich des Strahlmitteldepots nach unten verjüngt, insbesondere trichterförmig ausgebildet ist. Hierdurch wird sichergestellt, dass das auf die Behälterwand des Strahlmitteldepots abgegebene Strahlgut nicht festklebt.

Von besonderer Bedeutung ist für die vorliegende Erfindung, dass dem Strahlmitteldepot ein Schlammabscheider, insbesondere ein Zyklon-Abscheider, zugeordnet ist, der über eine ein Ventil, insbesondere ein Drosselventil, aufweisende Leitung oder einen Sekundärkreislauf mit dem Strahlmitteldepot und über eine Rücklaufleitung mit dem Strahlraum verbunden ist. Hier wird das Strahlgut auf einfache Weise gereinigt.

Vorteilhaft ist es auch, dass an das Strahlmitteldepot eine Leitung mit mindestens einem Ventil angeschlossen werden kann, sodass bei Inbetriebnahme bzw. Anfahrzustand der Anlage in diesem Bereich Luft oder -falls erforderlich - auch Wasser zugeführt wird. Hierdurch wird eine sehr gute Durchmischung des Strahlmittels auf kostengünstige Weise erreicht.

Auch ist es vorteilhaft, dass eine oder mehrere Strahldüsen am Auslassende der Leitung angeordnet und als Flach-, Oval- und/oder Runddüsen ausgebildet sind.

Ferner ist es vorteilhaft, dass ein Verfahren zum Strahlbearbeiten mit einer Vorrichtung nach Anspruch 1 folgende Merkmale aufweist:
a) Wenn die Anlage arbeitet, nimmt der Sammelraum, insbesondere die Druckschleuse, mindestens so viel Suspension auf, wie in einem Arbeitstakt aus den Strahldüsen austritt;
b) die Druckschleuse ist unterhalb des sich trichterförmig verjüngenden Strahlraums vorgesehen, der mit einer verschließbaren Durchgangsöffnung, insbesondere einem schaltbaren Ventil ausgestattet ist;
c) die Druckluft wird über mindestens einen Drucklufteinlass und über die Durchgangsöffnung in den Innenraum der Druckschleuse eingeführt;
d) die Rücklaufleitung zur Rückführung des aufgesammelten Granulatgemischs befindet sich im unteren Bereich des Sammelraums, insbesondere der Druckschleuse, in der die Einlassseite der Rücklaufleitung vorgesehen ist, über die die Suspension oder das Granulat wieder durch Über- oder Unterdruck im Strahlraum oder Unterdruck im Strahlmitteldepot in das Strahlmitteldepot zurückbefördert und dort neu durchmischt bzw. die Suspension aus Flüssigkeit und Granulat gebildet wird;
e) über die Leitung bzw. das Druckrohr und ein Ventil oder Quetschventil sowie die Strahldüsen wird der Strahlraum mit der Suspension beaufschlagt.

Vorteilhaft ist auch ein Verfahren zum Strahlbearbeiten mit einer Vorrichtung nach Anspruch 1, mit folgenden Merkmalen:
a) im Strahlmitteldepot wird je nach Betriebszustand durch den Zusatz von Flüssigkeit, insbesondere Wasser, das Granulat und die Flüssigkeitssuspension aufbereitet;
b) der im Strahlmitteldepot vorgesehene Mischer, insbesondere statischer Mischer oder Rührwerk mit Antriebsvorrichtung, lockert das im unteren Behälterbereich des Strahlmitteldepots angesammelt Granulat auf;
c) der im Strahlmitteldepot vorgesehene untere Sensor und obere Sensor kontrolliert den Befüllungszustand im Strahlmitteldepot und schließt oder öffnet das Ventil mit/oder ohne Drosselvorrichtung für eine Teillüftung während des Rücktransports der Suspension oder des Granulats aus dem Strahlraum bzw. Druckraum in das Strahlmitteldepot;
d) nach Einschalten der Anlage auf manuellen oder automatischen Strahlbetrieb wird der Sammelraum, insbesondere die Druckschleuse, in einem Taktbetrieb über die verschließbare Durchgangsöffnung, insbesondere das schaltbare Ventil, derart gesteuert, dass bei Erreichen eines Minimalniveaus im Sammelraum, insbesondere in der Druckschleuse, automatisch in einem bestimmten Rhythmus, insbesondere zwischen 1 min. und etwa 3 min., dem Strahlraum Frischwasser zugeführt wird.

Durch Aufspritzen der Suspension, die aus einer Flüssigkeit, insbesondere Wasser, und darin gleichmäßig verteilten Feststoffen, wie aufrauende, abtragende oder mattierende Stoffe insbesondere Korund, Siliziumoxid, Glasmehl oder dergleichen besteht, wird durch Bestrahlen einer Oberfläche eines Werkstücks eine einwandfreie Oberflächenstruktur erzielt. Es können auch glatte oder polierende Stoffe, wie Glasperlen, eingesetzt werden.

Bei der erfindungsgemäßen Anlage wird nicht die bei den meisten Strahlsystemen übliche Druckluft zur Beschleunigung der Strahlmittelkörner verwendet, sondern die Druckluft wird einzig dazu eingesetzt im Suspensions-Behälter Überdruck zu erzeugen, der die Suspension zu den Strahldüsen hinauspresst. Die eingesetzte Druckluft wird ferner dazu genutzt, das Gemisch von der Strahlkammer wieder in den Druckbehälter zurückzubefördern. Das Gemisch befindet sich in einem dauernden Kreislauf, deshalb muss auch dafür gesorgt werden, dass auf der Oberfläche der Suspension ein ständiges Druckluftpolster vorhanden ist.

Der Strahlprozess wird ferner dadurch bestimmt, dass stets eine gute Durchmischung der beiden Medien Flüssigkeit und Strahlmittel sichergestellt wird. Die gute Durchmischung ist ein entscheidender Faktor und durch die erfindungsgemäße Anordnung und Ausbildung der Anlage wird eine Separierung des Strahlguts vermieden.

Damit beim Strahlen nicht große Mengen der Flüssigkeit durch die Druckluft verdampft werden, wird die Anlage in komplett geschlossenem Kreislauf betrieben. Hierdurch können der Suspension auch Additive zugefügt werden, sodass neben der mechanischen Einwirkung auf die Oberfläche des zu behandelnden Guts bzw. Werkstücks mit Hilfe des Strahlmittels auch eine chemische Einwirkung auf der Oberfläche erreicht wird.

Die Suspension, die sich in einem stetigen Haupt- Kreislauf befindet, kann auch teilweise einem geschlossenen Nebenkreislauf zugeführt werden, zu dem der zyklonartige Schlammabscheider gehört. Mit Hilfe des Nebenkreislaufs wird fortlaufend eine regelbare Menge des Wassers zur Reinigung abgezweigt. Der Schlammabscheider ist hierzu an das Strahlmitteldepot mit einem Steigsichter angeschlossen. Hier steigt mit Hilfe des im Behälter herrschenden Überdrucks die Flüssigkeit auf. Die abfließende Menge wird durch ein Drosselventil so geregelt, dass die leichteren Partikel, also Verunreinigungen, langsamer absinken als das eingesetzte Strahlmittel. Das Ausscheiden dieser Partikel erfolgt in einem drucklosen, umgekehrten Prozess in dem zyklonartigen Abscheider. Die gereinigte Flüssigkeit fließt wieder in den Strahlraum und somit in den Kreislauf zurück.

Vorteilhaft ist es, wenn periodisch das Verhältnis von Wasser und Strahlmittel überprüft wird und im Bedarfsfall Additive zugesetzt werden. Hierzu ist es vorteilhaft, dass der Druckbehälter mit einem schaltbaren Ventil ausgestattet ist, sodass kleine Mengen Suspension abgezogen werden können.

Je nach Mischungsverhältnis werden Additive zugesetzt und damit auch der chemische Zustand des Strahlgemischs beeinflusst.

Weitere Vorteile und Einzelheiten der Erfindung sind in den Patentansprüchen und in der Beschreibung erläutert und in den Figuren dargestellt.

Dabei zeigen:
- Fig. 1: ein erstes Ausführungsbeispiel einer Vorrichtung zum Strahlbearbeiten bzw. Strahlen von Gegenständen, wie Bauelemente, Werkzeuge, Haushaltsgegenstände, Töpfe, Pfannen oder dergleichen, mit einem Strahlmitteldepot zur Aufnahme von Strahlmittel;
- Fig. 2: ein weiteres Ausführungsbeispiel einer Vorrichtung bzw. einer Gesamtanlage zum Strahlbearbeiten bzw. Strahlen von Gegenständen, ähnlich wie in Fig. 1 in Seitenansicht und teilweise in Draufsicht, jedoch mit zwei parallel wirkenden Sammelräumen oder Druckschleusen;
- Fig. 3: ein Strahlmuster auf der Oberfläche eines bearbeiteten Gegenstandes nach dem Stand der Technik;
- Fig. 4: ein Strahlmuster, das mit der erfindungsgemäßen Vorrichtung erreicht wird.
- Fig. 5 a bis 5d: verschiedene Ausführungsformen einer Düse, wobei
- Fig. 5d: einen Schnitt entlang der Linie A-B gemäß Fig. 5b zeigt und die
- Fig. 5e + 5f: die Leitelemente bzw. den statischen Mischer.

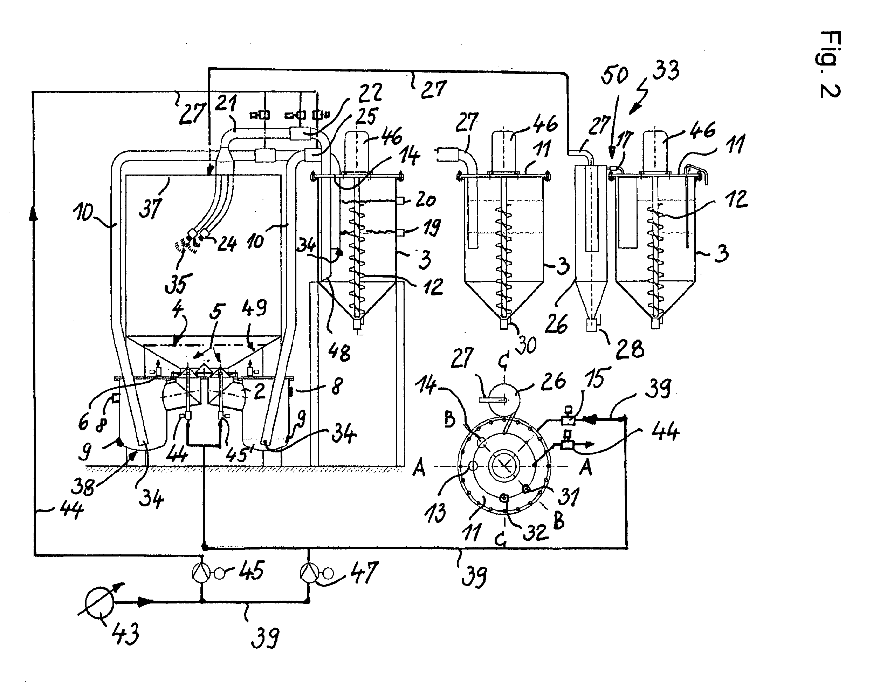

In Fig. 2 ist eine Vorrichtung 33 zum Strahlbearbeiten bzw. Strahlen von Gegenständen, wie Bauelemente, Werkzeuge, Haushaltsgegenstände, Töpfe, Pfannen dargestellt und mit einem Strahlmitteldepot 3 versehen, das zur Aufnahme von Strahlmittel 35 dient. In Fig. 2b ist das Strahlmitteldepot 3 in Seitenansicht und in Fig. 2d in einer Draufsicht dargestellt, damit die Anschlüsse der einzelnen Leitungen besser erkennbar sind.

Der Vorrichtung 33 ist eine Mischeinrichtung 52, wie nachstehend näher beschrieben, zugeordnet, die im Bereich einer Leitung 21 einer Strahldüse 24 oder in oder vor der Einlassöffnung der Strahldüse 24 vorgesehen sein kann.

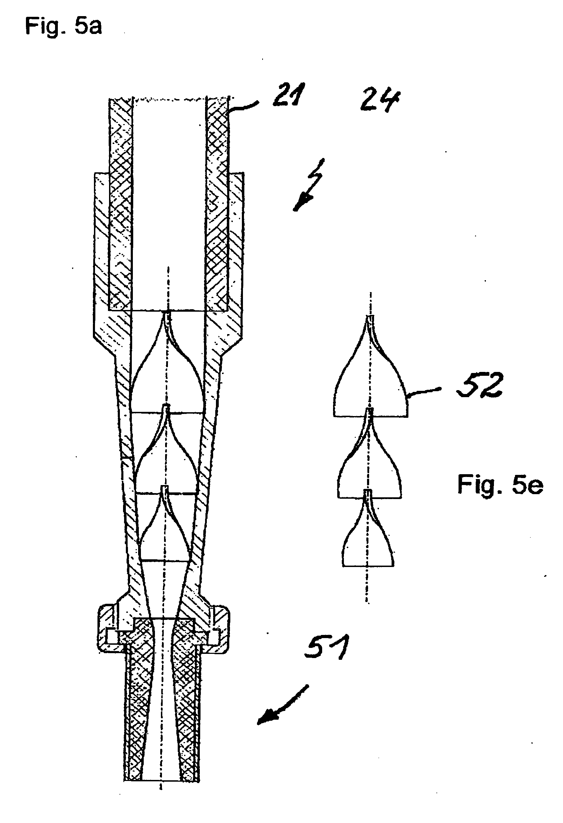

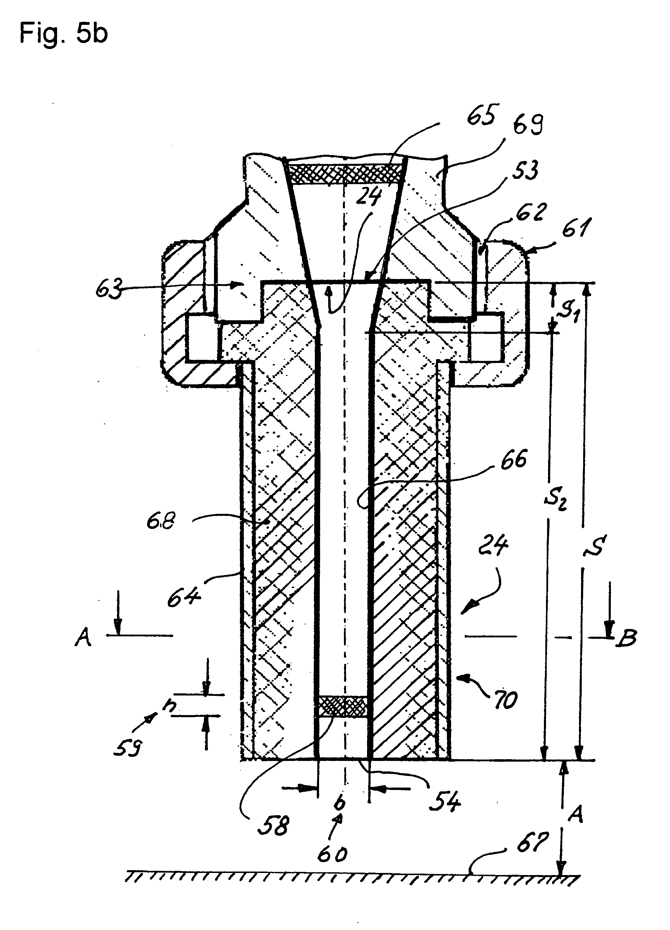

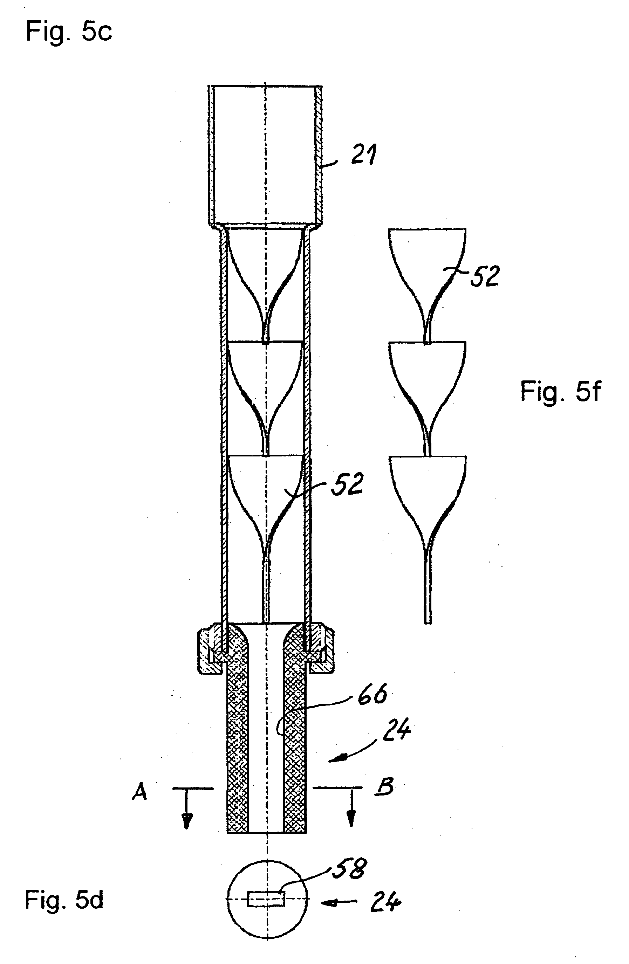

Ein Strahlraum 1 kann als rechteckförmiges oder auch zylinderförmiges Gehäuse ausgebildet und mit einem Deckel 37 ausgestattet sein, der mit einem Leitungsanschluss 29 für ein in der Zeichnung nicht dargestelltes Gebläse mit Wasserdampfabscheider. Ferner ist das Strahlmitteldepot 3 zur Aufnahme von Strahlmittel 35 über mindestens eine Leitung 21 mit dem Strahlraum 1 verbunden. Die Leitung 21 weist gemäß Fig. 5 eine oder mehrere Strahldüsen 24 auf, die sich in den Strahlraum 1 erstrecken und mit deren Hilfe das zu bestrahlende Gut mit Strahlmittel 35 beaufschlagt werden kann.

Der Strahlraum 1 kann im unteren Bereich als Trichter ausgebildet und mit einem Sieb 4 ausgerüstet sein, das das Eindringen von Fremdkörpern in den Kreislauf verhindert.

Am unteren Ende des Trichters des Strahlraums 1 sind mindestens ein, insbesondere zwei, automatisch schaltbare Ventile 5 angebracht, die einen kegelförmigen Ventilkörper aufweisen, der lose auf einem Rohr sitzt und beim Einströmen von Druckluft über eine Leitung 6 in eine Schleuse 2 nach oben verstellt wird. Wird die Druckluftzufuhr nach Entlüften des Sammelraums, insbesondere Druckschleuse 2, unterbrochen, fällt der kegelförmige Ventilkörper wieder auf seinen Ventilsitz zurück.

Die Druckschleuse 2 arbeitet im Taktbetrieb und muss so viel Suspension 35 aufnehmen, wie in einem Arbeitstakt aus der Strahldüse 24 heraustritt. Die Schleuse kann unterschiedlich ausgebildet sein. Sie kann, je nach den Platzverhältnissen, direkt unterhalb des automatischen Ventils 5 angebracht sein, oder seitlich herausragen.

Die Schleuse weist, wie bereits erwähnt, für den Drucklufteintritt mindestens ein schaltbares Ventil 5 und für die Entlüftung mindestens ein schaltbares Ventil 7 auf.

Die Strahldüsen 24 können als Rund-, Oval- oder vorzugsweise als Flachdüsen ausgebildet sein. Sind mehrere Strahldüsen 24 vorgesehen, so kann eine größere Leistung erreicht werden.

Die Strahldüse ist nach einem Ausführungsbeispiel gemäß Fig. 5a bis 5c an die Leitung 21 angeschlossen, die einen runden oder auch einen anderen Querschnitt, ähnlich wie die Strahldüse 24 aufweisen kann. Gemäß Fig. 5a schließt sich an die Leitung 21 ein sich kontinuierlich verjüngendes bzw. konisches Leitungsstück bzw. Düsenstück oder gemäß Fig. 5c eine Leitung 21 mit gleichbleibend großem Querschnitt an.

In den Fig. 5b und 5c sind zwei weitere Alternativen dargestellt, wobei die Ausführungsform nach Fig. 5c die bevorzugte Ausführungsform ist. Die beiden Ausführungsformen unterscheiden sich nur geringfügig von einander. Nach Fig. 5b ist die Leitung 21 wie in Fig. 5a konisch ausgebildet, während nach der Ausführungsform Fig. 5c die Leitung 21 bzw. das Leitungsteil über ihre gesamte Länge einen gleich großen Querschnitt aufweist.

Die Strahldüse 24 besteht aus einem Düsenkern 68 mit einer Ummantelung 64 und weist einen Düsenkanal 66 auf, der eine Einlassöffnung 53 und eine Auslassöffnung 54 aufweist. Auf der gesamten Wegstrecke S₂ zwischen Einlassöffnung 53 und Auslassöffnung 54 des Düsenkanals 66 kann der Querschnitt 58 konstant sein bzw. seine Innenwände parallel zueinander verlaufen. Ferner kann der Querschnitt 58 in etwa rund, oval, mehreckförmig, insbesondere rechteckförmig, ausgebildet sein.

Der Düsenkanal 66 der Strahldüse 24 kann im Einlassbereich einen Querschnitt 65 aufweisen, der größer ist als ein Querschnitt 58, der über die gesamte Wegstrecke S₂ des Düsenkanals 66 gleich groß ist.

Gemäß Fig. 5b kann das Verhältnis Höhe 59 zu Breite 60 des Querschnitts 58 des Düsenkanals 66 1 zu 4 bzw. 1 zu 3, insbesondere 1 zu 2.5, betragen.

Die Höhe 59 des Querschnitts 58 des Düsenkanals 66 beträgt zwischen 2 und 6 mm bzw. zwischen 3 und 5 mm, insbesondere in etwa 4 mm, und die Breite 60 des Querschnitts 58 des Düsenkanals 66 zwischen 7 und 13 mm bzw. 9 und 11 mm, insbesondere etwa 10 mm.

Der Abstand A zwischen dem Auslassende 54 der Strahldüse 24 und der Auftreffstelle des Strahlmittels 35 auf eine Oberfläche 67 des Werkstücks beträgt etwa zwischen 30 und 70 mm oder 40 bis 60 mm, insbesondere etwa 50 mm.

Die Innenoberfläche des Düsenkanals 66 kann eine polierte bzw. geläppte Fläche aufweisen und der Düsenkern 68 aus einem legierten Stahl, insbesondere aus Edelstahl, gebildet sein.

Die Strahldüse 24 kann als zylindrische Runddüse, als Runddüse mit konischer Erweiterung 51 oder als Flachdüse ausgebildet sein. Die Formgebung der Strahldüse 24 wird durch die Strahlaufgabe bestimmt. In der Strahldüse 24 können eine oder mehrere Leitelemente 52 vorgesehen sein, die zur Verbesserung des Strahlbildes gemäß Fig. 4 beitragen und für eine noch intensivere Vermischung von Flüssigkeit und Granulat sorgen. Die Leitelemente 52 können aus einzelnen schraubenförmigen Elementen bestehen, die entweder fest miteinander verbunden bzw. verschweißt oder zusammengesteckt werden können. Die Strahldüse 24 und/oder die Leitelemente 52 sind so ausgebildet, dass sie leicht ausgetauscht werden können.

Nach einer weiteren Variante kann an den unteren Teil des Strahlmitteldepots 3 eine Leitung 72 mit mindestens einem Ventil 74 angeschlossen werden, sodass bei Inbetriebnahme bzw. Anfahrzustand der Anlage in diesem Bereich Luft oder falls erforderlich auch Wasser zugeführt wird, sodass dort das gesammelte Gemisch im Strahlmitteldepots 3 aufwirbelt und dadurch insgesamt noch besser vermischt. Während des laufenden Prozesses wird die Leitung über das Ventil 54 wieder geschlossen entweder von Hand oder aufgrund eines Steuerbefehls einer in der Zeichnung nicht dargestellten Rechenanlage. Überschüssige Luft kann, falls erforderlich ist mit Hilfe eines in der Zeichnung nicht dargestellten Ventils aus der Anlage abgeben werden.

Je nach Ausführungsform kann auch auf den Mischer 12 verzichtet werden und wie beschrieben lediglich mit Hilfe von Luft die Suspension aufgemischt werden.

Ferner ist es vorteilhaft, wenn in einem internen Wasserkreislauf gearbeitet und eine außerhalb des Kessels liegende in der Zeichnung nicht dargestellte Membranpumpe eingesetzt wird.

Bei dieser Anordnung saugt die Pumpe das Wasser an, wobei die Einlassseite 48 der Leitung 21 nur wenig unterhalb des Minimalniveaus im Druckkessel vorgesehen ist.

Beim Anfahren der Anlage wird mit klarem Wasser gearbeitet und bei längerem Betrieb weist die Anlage geringste Strahlmittelkonzentration auf. Die Druckleitung 21 kann bis an den tiefsten Punkt im Druckkessel 3 geführt werden.

Diese Anlage kann unabhängig von den Druckverhältnissen arbeiten, das heißt, sie funktioniert unabhängig davon ob der Druckkessel 3 unter Druck steht oder drucklos ist.

Mit Hilfe einer entsprechenden Steuerung arbeitet die Anlage absolut sicher. Selbst nach wenigen Stunden der Betriebsunterbrechung, kann ohne besondere Vorkehrungen die Anlage jederzeit gestartet werden. Nach einem Stillstand von einigen Tagen ist es vorteilhaft, wenn die Pumpe ca. eine Stunde läuft und die Saugleitung im klaren Wasser liegt, sodass die Pumpe und die Rohrverbindungen mit klarem Wasser durchgespült werden.

Der Einsatz einer Membranpumpe bringt optimale Ergebnisse. Auch bei wochenlangem Stillstand der Anlage ist nach wenigen Minuten wieder eine gute Durchmischung des Strahlmittels erreicht. Die Anlage ist hierdurch sehr unkompliziert und kostengünstig und weist vor allen Dingen einen sehr geringen Verschleiß auf.

In die Düsenhalterung kann eine Stahl-, Keramik-, Hartmetall-, Borkarbid- oder Polyamidwerkstoffdüse eingesetzt und mit Hilfe eines Befestigungsmittels, insbesondere einer Überwurfmutter 61, an der Leitung 21 gesichert werden.

In die Düsenhalterung kann auch ein statischer Mischer integriert werden, der das Strahlgut abwechselnd nach links und nach rechts leitet. Vorteilhaft ist es, wenn mindestens drei Mischer-Elemente eingesetzt werden, die leicht auswechselbar sein müssen, da sie großem Verschleiß unterliegen. Der Mischer kann so ausgebildet sein, dass er nach Entfernen der Strahldüse 24 aus der Leitung 21 gezogen werden kann.

Durch den Mischer wird der Suspensionsfluss mehrfach getrennt und abwechselnd nach links und nach rechts verwirbelt. Hierzu ist es vorteilhaft, wenn in den Mischer mindestens drei Mischelemente eingesetzt werden. Diese können zu einem Bausatz zusammengefasst bzw. miteinander verschweißt sein und dann eingebaut werden. Da die Mischelemente einem gewissen Verschleiß unterliegen, ist es vorteilhaft, dass sie leicht auswechselbar sind.

Der Druckkessel 3 zur Aufnahme des Mischers 12 kann im unteren Bereich konisch ausgebildet sein. Hierdurch beschleunigt die Suspension während des Mischvorgangs kontinuierlich in Richtung nach unten.

Das Strahlmittel 35 wird mit Hilfe einer Druckerzeugungseinrichtung 43 in das Strahlmitteldepot 3 gepresst. Die Druckerzeugungseinrichtung 43 kann ein Kompressor sein, der über eine Druckleitung 39 und ein Schaltventil 15 an einen Deckel 11 des Strahlmitteldepots 3 angeschlossen ist und der Anlage bzw. dem Strahlmitteldepot 3 Druckluft zuführt, sodass über die Leitung 21 das Strahlgemisch 35 dem Strahlraum 1 zugeführt bzw. in diesen gepresst wird.

Ferner ist eine zweite Leitung 10 vorgesehen, die das Granulat oder das Granulatgemisch und/oder eine aus Granulat und Flüssigkeit gebildete Suspension aus dem unteren Bereich des Strahlraums 1 bzw. aus einem an den Strahlraum 1 angeschlossenen Sammelraum, insbesondere der Druckschleuse 2, in das Strahlmitteldepot 3 zurückführt, das ebenfalls als Druckraum ausgebildet ist. Die zweite Leitung 10 weist hierzu eine erste Einlassseite 34 auf, die kurz vor einem unteren Boden 38 der Druckschleuse 2, endet und dadurch stets in das aus der Strahldüse 24 ausgeschiedene Granulatgemisch eingetaucht ist, sodass dadurch die Druckluft das Granulatgemisch in das Strahlmitteldepot 3 zurückführen kann, wenn die Anlage in Betrieb ist.

Die aus dem Strahlraum 1 und zumindest dem Strahlmitteldepot 3 bestehende Anlage ist als geschlossenes Drucksystem ausgebildet, das im Arbeitseinsatz unter einem Arbeitsdruck, insbesondere unter Gas- oder Druckluft, steht, der zumindest im Strahlmitteldepot 3 ständig auf der aus Flüssigkeit und Strahlmittel gebildeten Suspension und/oder dem Granulat und/oder dem Granulatgemisch lastet. Dadurch wird auch sichergestellt, dass sich die Druckluft nicht mit dem Granulatgemisch vermischt, sondern nur als Fördermittel dient.

Die Schleuse 2 des Strahlraums 1 weist im unteren Bereich einen ersten Sensor 8 und einen zweiten Sensor 9 auf, wobei der erste bzw. obere Sensor 8 die zulässige maximale Füllhöhe und der zweite bzw. untere Sensor 9 die minimale untere Befüllgrenze anzeigt, während das Strahlmitteldepot 3 ebenfalls im unteren Bereich einen dritten Sensor 19 und oberen Bereich einen vierten Sensor 20 aufweist, wobei der vierte bzw. obere Sensor 20 die maximal zulässige Füllhöhe und der dritte bzw. untere Sensor 19 die minimale Befüllgrenze für die Suspension bzw. das Granulatgemisch anzeigt.

Im Strahlmitteldepot 3 ist eine Mischeinrichtung, insbesondre ein Rührwerk 12 mit einer Antriebsvorrichtung 46 vorgesehen, das sich bis in den unteren Bereich des Strahlmitteldepots 3 erstreckt, wobei sich der untere Bereich des Strahlmitteldepots 3 nach unten verjüngt, insbesondere trichterförmig ausgebildet ist. In dem trichterförmigen Teil 49 des Strahlmitteldepots 3 befindet sich ein Schaltventil, insbesondere Handventil 30, über das das Strahlmitteldepot 3 entleert werden kann.

Dem Strahlmitteldepot 3 ist ein Schlammabscheider, insbesondere ein Zyklon-Abscheider 26, zugeordnet, der über eine Leitung 17 oder einen Sekundärkreislauf mit dem Strahlmitteldepot 3 und über eine Rücklaufleitung 27 mit dem Strahlraum 1 verbunden ist, sodass gereinigte Flüssigkeit, insbesondere Wasser, dem Strahlraum 1 wieder zugeführt werden kann.

Gemäß Fig. 2 kann die Anlage mit zwei oder mehreren Druckschleusen 2 ausgestattet sein, um die Betriebssicherheit und Leistung der Anlage zu vergrößern.

Die Anlage bzw. der Strahlraum 1 arbeitet wie folgt:

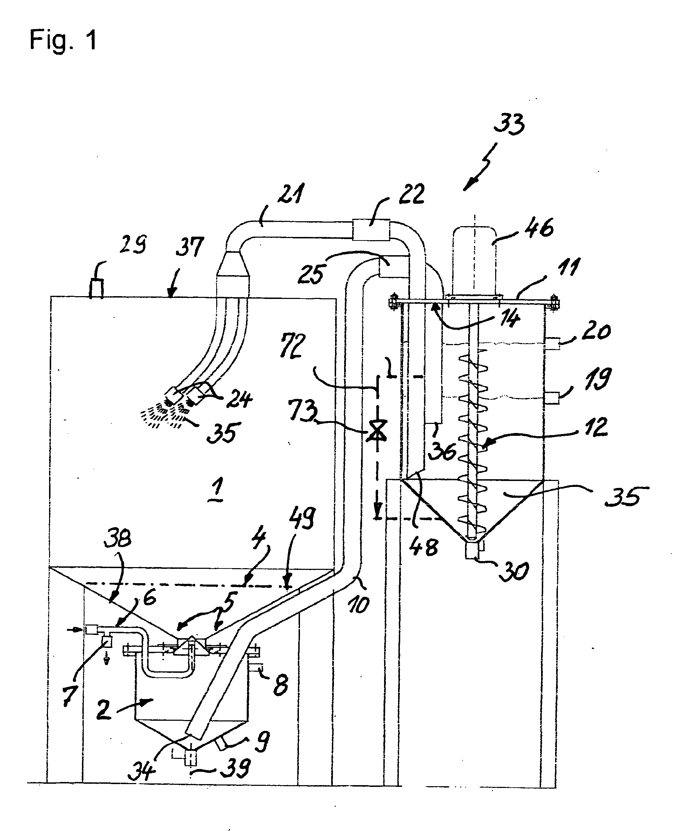

Bei Verwendung nur der Druckschleuse 2 gemäß Fig. 1 muss die Verbindung zwischen Druckbehälter 3 und Druckschleuse 2 durch das Quetschventil 25 und das Ventil 6 für den Befüllvorgang unterbrochen werden. Kurzzeitig muss das Ventil, insbesondere Entlüftungsventil 44, geöffnet werden, womit ein kleiner Druckluftverlust verbunden ist. Bei Verwendung der Druckschleuse 2 schwankt das Füllniveau im Druckkessel 3 in Abhängigkeit des Volumens des Strahlmittels in der Druckschleuse 2.

Bei Ausrüstung einer Anlage mit zwei Druckschleusen 2 verändert sich das Niveau in der Druckschleuse 2 nur geringfügig. Die Menge der durch die Strahldüsen 24 abfließenden Suspension wird kontinuierlich über die Druckschleusen 2 zurücktransportiert. Je nach Arbeitsbedingungen immer eine Druckschleuse 2 mit dem Druckkessel 3 gekoppelt, während die andere Druckschleuse 2 befüllt werden kann. Der Sammelraum 1, insbesondere eine oder mehrere Druckschleusen 2, sind über die Leitung 39 und das Schaltventil, insbesondere elektromagnetisches Schaltventil 15, an den Deckel 11 des Strahlmitteldepots 3 angeschlossen. An die Leitung 39 ist der Kompressor 43 angeschlossen.

Ein weiteres Schaltventil 16 kann je nach Bedarf am Druckbehälter angeschlossen werden, um einen Druckaufbau in der Anlage vornehmen zu können, der normalerweise über die an den Sammelraum, insbesondere Druckschleuse 2, angeschlossene Leitung 39 erfolgt, die hierzu mit Schaltventilen 45, 47 ausgestattet ist. Die Schaltung des Ventils 5 ist in den Beispielen gemäß Fig. 1 und 2 gleich. Zur Druckerhöhung während des Arbeitsprozesses ist die Leitung 39 und das Ventil 45 sowie eine Leitung 44 an den oberen Deckel 37 des Strahlraums 1 angeschlossen.

Das Füllniveau verändert sich im Druckbehälter normalerweise nur geringfügig, da die eingeführte Suspensions-Menge und die zum Strahlmitteldepot 3 rücktransportierte Suspensions-Menge in etwa gleich ist. Je nach Arbeitsbedingung ist es auch möglich, die Strahldüse 24 direkt mit Strahlmittel aus dem Sammelraum, insbesondere der Druckschleuse 2, zu speisen. Vorteilhaft ist es jedoch, das Stahlgemisch aus dem Druckbehälter einzusetzen, um eine ständige Durchmischung der Suspensions-Menge sicherzustellen. Beim Abschalten der Anlage muss die Druckschleuse 2 die gesamte Suspensionsmenge aufnehmen.

Da sich die Feststoffe in der Suspension in kurzer Zeit im Behälter stark nach unten konzentrieren und in einigen Stunden eine feste Masse auf dem Boden des Behälters bzw. des Strahlmitteldepots 3 bilden können, sind am Strahlmitteldepot 3 alle Anschlüsse oben im Deckel 11 vorgesehen. Bei abgeschaltetem Prozess erfolgt die Sedimentation im Behälter nur nach sodass keine Blockaden in den Ventilen und Rohren entstehen können.

Vorteilhaft ist es, wenn mit Hilfe einer Kontrolleinrichtung, wie Sensoren, die Druckschleuse im unteren Bereich besonders überwacht und dadurch sichergestellt wird, dass bei Auftreten einer Störgröße die Kontrolleinrichtung ein optisches und/oder akustisches Signal ausgibt und eine automatische Entleerung des Sammelraums, insbesondere der Druckschleuse 2, einleitet.

Der Druckbehälter bzw. das Strahlmitteldepot 3 ist mittels eines massiven glatten Deckels 11 abgedichtet. Auf dem Deckel 11 sind verschiedene Armaturen sowie die Lagerung für einen Mischer bzw. ein Rührwerk 12 mit Antrieb 46 vorgesehen.

Die Rückführung der Suspension 35 erfolgt über die Leitung 10 und einen Anschluss 14 im Deckel 11. Das Ventil 15 ist bei Einsatz nur einer Druckschleuse 2 dauernd offen, da das Niveau im Druckkessel 3 schwankt. Bei der Verwendung von zwei Druckschleusen 2 bleibt das Ventil 15 dauernd geschlossen. Über die Leitung 39 und das Ventil 15 erfolgt der Druckaufbau.

Mit Hilfe eines am Deckel 11 vorgesehenen Ventils 32 kann auch während des Arbeitsprozesses eine Probe entnommen werden.

Diese konzentrierte Anordnung der Anschlüsse und Kontrolleinrichtungen auf dem Deckel 11 bietet je nach den Bedürfnissen unterschiedlich große Abmessungen für den Druckbehälter.

Zur Reinigung der Flüssigkeit im Strahlmitteldepot 3 ist am Deckel 11 ein Steigrohr 18 befestigt, das über die Leitung 17 mit dem Zyklonabscheider 26 verbunden ist.

Die Leitung 21 weist ein Quetschventil 22 auf, über das die Strahldüsen 24 zugeschaltet werden können. Für die Rückführung der Suspension 34 über die Leitung 10 wird ein identisches Quetschventil 25 geschaltet, das in der Leitung 10 vorgesehen ist.

Eine verhältnismäßig langsam drehende Schnecke 42 des im Druckbehälter vorgesehenen Mischers 12 kann auch dann anlaufen, wenn sich eine feste Masse auf dem Boden des Strahlmitteldepots 3 gebildet hat. Eine Schnecke als Rührwerk hat geringe separierende Wirkung gegenüber einem schnell drehenden Quirl. Die permanente Durchmischung wird aber auch dadurch unterstützt, dass die zurückströmende Suspension in der Druckschleuse den Mischprozess unterstützt. Die Austrittsöffnung 31 in dem Sammelraum, insbesondere der Druckschleuse 2, ist deshalb unterhalb des Minimalniveaus im Druckbehälter vorgesehen. Der Sammelraum, insbesondere die Druckschleuse 2, kann über das Ventil 7 und der Zyklon-Abscheider 26 über ein Ventil 28 entleert und der abgesetzte Schlamm abgelassen werden. Über ein am Strahlmitteldepot 3 vorgesehenes Ventil 32 können während des Arbeitsprozesses Proben aus dem Strahlmitteldepot 3 entnommen werden.

### Bezugszeichen

- 1: Strahlraum
- 2: Sammelraum, Druckschleuse
- 3: Strahlmitteldepot, Druckkessel, Druckbehälter
- 4: Sieb
- 5: schaltbares Ventil
- 6: Leitung, Drucklufteinlass
- 7: Ventil zur Entleerung bzw. Entlüftung der Druckschleuse
- 8: erster Sensor, oberer Sensor
- 9: zweiter Sensor, unterer Sensor
- 10: Rücklaufleitung
- 11: Deckel
- 12: Rührwerk mit Antriebsvorrichtung 46, Mischer
- 13: Druckluftzufuhrleitung
- 14: Anschluss für die Rückführleitung der Suspension
- 15: Schaltventil
- 16: Schaltventil
- 17: Leitung
- 18: Steigrohr
- 19: dritter Sensor, unterer Sensor
- 20: vierter Sensor, oberer Sensor
- 21: Leitung, Druckmittelleitung
- 22: Ventil, Quetschventil
- 24: Strahldüse
- 25: Ventil, Quetschventil
- 26: Zyklon-Abscheider
- 28: Ventil am Zyklon-Abscheider
- 27: Rücklaufleitung
- 29: Leitungsanschluss für ein Gebläse mit Wasserdampfabscheider
- 30: Ventil, Schaltventil, Handventil
- 31: Sicherheitsventil
- 32: Ventil
- 33: Vorrichtung zum Strahlbearbeiten bzw. Strahlen
- 34: Einlassseite der Rücklaufleitung 10
- 35: Strahlmittel, Granulatgemisch, Suspension
- 36: Auslassende der Rücklaufleitung 10
- 37: Deckel
- 38: Boden des Sammelraums, insbesondere der Druckschleuse 2
- 39: Leitung, Druckleitung
- 40: Schaltventil
- 42: Rührschnecke
- 43: Druckerzeugungseinrichtung
- 44: Leitung, Ventil
- 45: Ventil
- 46: Antriebsvorrichtung
- 47: Ventil
- 48: Einlassseite der Druckmittelleitung 21
- 49: trichterförmiger Teil des Strahlmitteldepots 3
- 50: Ventil, Drosselventil für die Leitung 17
- 51: konische Erweiterung der Strahldüse 24
- 52: Mischeinrichtung, Leitelement, statischer Mischer
- 53: Einlassöffnung
- 54: Auslassöffnung
- 58: Querschnitt
- 59: H = Höhe
- 60: B = Breite
- 61: Verschraubung, Überwurfmutter
- 62: Gewinde
- 63: Dichtelement
- 64: Ummantelung
- 65: Querschnitt
- 66: Düsenkanal mit gleichbleibendem Querschnitt
- 67: Oberfläche Werkstück
- 68: Düsenkern
- 69: Düsenteil
- 70: Düsenteil
- 71: kontinuierliche bzw. konische Verjüngung des Düsenkanals 66
- 72: Leitung
- 73: Ventil

- S: gesamte Wegstrecke
- S₁: Wegstrecke
- S₂: Wegstrecke
- A: Abstand

## Patentansprüche

1. Vorrichtung (33) zum Strahlbearbeiten bzw. Strahlen von Gegenständen, wie Bauelemente, Werkzeuge, Haushaltsgegenstände, Töpfe, Pfannen oder dergleichen, mit einem Strahlmitteldepot (3) zur Aufnahme eines Strahlmittels (35), insbesondere eines Granulats, eines Granulatgemisches oder einer aus Granulat und Flüssigkeit gebildeten Suspension, das über mindestens eine Druckmittelleitung (21) mit einer Strahldüse (24) verbunden ist, die sich in einen Strahlraum (1) erstreckt, in den die zu bestrahlenden Gegenstände eingebracht werden können, mit folgenden Merkmalen:
a) eine Druckerzeugungseinrichtung (43) zum Eingeben der Druckluft oberhalb des im Strahlmitteldepot (3) vorgesehenen Strahlmittels (35) und zum Pressen des Strahlmittels in den Strahlraum;
b) zur Förderung des Strahlmittels (35) ist die Druckmittelleitung (21) vorgesehen, deren Einlassseite (48) sich im Arbeitsprozess in das im Strahlmitteldepot (3) vorgesehene Strahlmittel erstreckt, auf das die Druckluft wirkt, wobei das Auslassende der Druckmittelleitung (21) eine oder mehrere Strahldüsen (24) aufweist, die im Strahlraum (1) platziert ist bzw. sind;
c) eine zweite Leitung (10) zum Zurückführen des Strahlmittels (35) mit Hilfe von Druckluft aus dem Strahlraum (1) in das Strahlmitteldepot (3),
**dadurch gekennzeichnet,**
**dass** die aus dem Strahlraum (1) und zumindest dem Strahlmitteldepot (3) bestehende Anlage als geschlossenes Drucksystem ausgebildet ist, das im Arbeitseinsatz unter einem Arbeitsdruck steht, der zumindest im Arbeitsprozess auf dem Strahlmittel lastet,
wobei eine Mischeinrichtung mit Leitelementen (52) im Bereich der Druckmittelleitung (21) der Strahldüse (24) oder in oder vor der Einlassöffnung der Strahldüse (24) vorgesehen ist.

2. Vorrichtung nach Anspruch 1
**dadurch gekennzeichnet,**
**dass** der Strahlraum (1) in seinem unteren Bereich einen Sammelraum, insbesondere eine oder mehrere Druckschleusen (2), aufweist, in dem das zur Strahlung verwendete Granulatgemisch aufgefangen wird und in den sich ein Einlassende (34) der Rücklaufleitung (10) erstreckt, die mit dem Strahlmitteldepot (3) in Verbindung steht und deren Auslassende (36) sich im unteren Bereich des Strahlmitteldepots (3) befindet oder sich im Arbeitsprozess unterhalb des Niveaus des im Strahlmitteldepot (3) aufgenommenen Strahlgemischs erstreckt.

3. Vorrichtung nach Anspruch 1
**dadurch gekennzeichnet,**
**dass** der Strahlraum (1) im unteren Bereich, insbesondere im Bereich der Druckschleusen (2), einen ersten und zweiten Sensor (8, 9) aufweist, wobei der erste bzw. obere Sensor (8) die zulässige maximale Füllhöhe und der zweite bzw. untere Sensor (9) die minimale untere Befüllgrenze anzeigt, während das Strahlmitteldepot (3) ebenfalls im unteren Bereich einen dritten Sensor (19) und im oberen Bereich einen vierten Sensor (20) aufweist, wobei der vierte bzw. obere Sensor (20) die maximal zulässige Füllhöhe und der dritte bzw. untere Sensor (19) die minimale Befüllgrenze für die Suspension bzw. das Granulatgemisch (35) anzeigt.

4. Vorrichtung nach Anspruch 1,
**dadurch gekennzeichnet,**
**dass** im Strahlmitteldepot (3) eine Mischeinrichtung, insbesondere ein Rührwerk (12) mit einer Antriebsvorrichtung (46), vorgesehen ist, das sich bis in den unteren Bereich des Strahlmitteldepots (3) erstreckt, wobei sich der untere Bereich des Strahlmitteldepots (3) nach unten verjüngt, insbesondere trichterförmig ausgebildet ist.

5. Vorrichtung nach Anspruch 1
**dadurch gekennzeichnet,**
**dass** dem Strahlmitteldepot (3) ein Schlammabscheider, insbesondere ein Zyklon-Abscheider (26), zugeordnet ist, der über eine ein Ventil, insbesondere ein Drosselventil (50), aufweisende Leitung (17) oder einen Sekundärkreislauf mit dem Strahlmitteldepot (3) und über eine Rücklaufleitung (27) mit dem Strahlraum (1) verbunden ist.

6. Vorrichtung nach Anspruch 1
**dadurch gekennzeichnet,**
**dass** an das Strahlmitteldepot (3) eine Leitung (72) mit mindestens einem Ventil (73) angeschlossen werden kann, sodass bei Inbetriebnahme bzw. Anfahrzustand der Anlage in diesem Bereich Luft oder - falls erforderlich - auch Wasser zugeführt wird.

7. Vorrichtung nach Anspruch 1
**dadurch gekennzeichnet,**
**dass** eine oder mehrere Strahldüsen (24) am Auslassende der Leitung (21) angeordnet und als Flach-, Oval- und/oder Runddüsen ausgebildet sind.

8. Verfahren zum Strahlarbeiten mit einer Vorrichtung nach Anspruch 1, **gekennzeichnet durch** folgende Merkmale:
a) Wenn die Anlage arbeitet, nimmt der Sammelraum, insbesondere die Druckschleuse (2), mindestens so viel Suspension (35) auf, wie in einem Arbeitstakt aus den Strahldüsen (24) austritt;
b) die Druckschleuse (2) ist unterhalb des sich trichterförmig verjüngenden Strahlraums (1) vorgesehen, der mit einer verschließbaren Durchgangsöffnung, insbesondere einem schaltbaren Ventil (5), ausgestattet ist;
c) die Druckluft wird über mindestens einen Drucklufteinlass (44, 45) und über die Durchgangsöffnung in den Innenraum der Druckschleuse (2) eingeführt;
d) die Rücklaufleitung (10) zur Rückführung des aufgesammelten Granulatgemischs befindet sich im unteren Bereich des Sammelraums, insbesondere der Druckschleuse (2), in der die Einlassseite (34) der Rücklaufleitung (10) vorgesehen ist, über die die Suspension (35) oder das Granulat wieder **durch** Über- oder Unterdruck im Strahlraum (1) oder Unterdruck im Strahlmitteldepot (3) in das Strahlmitteldepot (3) zurückbefördert und dort neu durchmischt bzw. die Suspension aus Flüssigkeit und Granulat gebildet wird;
e) über die Leitung bzw. das Druckrohr (21) und das Ventil oder Quetschventil (22) sowie die Strahldüsen (24) wird der Strahlraum (1) mit der Suspension beaufschlagt.

9. Verfahren zum Strahlarbeiten mit einer Vorrichtung nach Anspruch 1,
**gekennzeichnet durch** folgende Merkmale:
**a)** Im Strahlmitteldepot (3) wird je nach Betriebszustand **durch** den Zusatz von Flüssigkeit, insbesondere Wasser, das Granulat und die Flüssigkeitssuspension (35) aufbereitet;
**b)** der im Strahlmitteldepot (3) vorgesehene Mischer (12), insbesondere statischer Mischer oder Rührwerk mit Antriebsvorrichtung (46), lockert das im unteren Behälterbereich des Strahlmitteldepots (3) angesammelt Granulat (35) auf;
**c)** der im Strahlmitteldepot (3) vorgesehene untere Sensor (19) und der obere Sensor (20) kontrollieren den Befüllungszustand im Strahlmitteldepot (3) und schließen oder öffnen das Ventil (44, 45) mit oder ohne Drosselvorrichtung für eine Teillüftung während des Rücktransports der Suspension oder des Granulats aus dem Strahlraum bzw. Druckraum (1) in das Strahlmitteldepot (3);
**d)** nach Einschalten der Anlage auf manuellen oder automatischen Strahlbetrieb wird der Sammelraum, insbesondere die Druckschleuse (2), in einem Taktbetrieb über die verschließbare Durchgangsöffnung, insbesondere das schaltbare Ventil (44, 45), derart gesteuert, dass bei Erreichen eines Minimalniveaus im Sammelraum, insbesondere in der Druckschleuse (2), automatisch in einem bestimmten Rhythmus, insbesondere zwischen 1 min. und etwa 3 min., dem Strahlraum (1) Frischwasser zugeführt wird.

## Claims

1. Device (33) for blast-machining or abrasive blasting objects such as structural elements, tools, household objects, pots, pans or the like, having a blast pot (3) for holding a blasting abrasive (35), in particular a granular material, a granular material mixture or a suspension formed from granular material and liquid, which is connected via at least one pressure medium line (21) to an abrasive blasting nozzle (24) which extends into a blasting space (1) into which the objects which are to be blasted can be placed, having the following features:
a) a pressure-generating means (43) for introducing the compressed air above the blasting abrasive (35) provided in the blast pot (3) and for forcing the blasting abrasive into the blasting space;
b) to deliver the blasting abrasive (35) the pressure medium line (21) is provided, with an inlet side (48) which extends in the working process into the blasting abrasive provided in the blast pot (3) on which the compressed air acts, the outlet end of the pressure medium line (21) having one or more blasting nozzles (24) which is/are placed in the blasting space (1);
c) a second line (10) for conveying the blasting abrasive (35) out of the blasting space (1) and back into the blast pot (3) by means of compressed air, **characterized in that** the system consisting of the blasting space (1) and at least the blast pot (3) is designed as a closed pressurized system to which in operation a working pressure is applied which at least in the working process acts on the blasting abrasive, wherein a mixing apparatus with guide elements (52) is provided in the region of the pressure medium line (21) of the blasting nozzle (24) or in or upstream of the inlet opening of the blasting nozzle (24).

2. Device according to Claim 1, **characterized in that** the blasting space (1) has in its lower region a collecting space, in particular one or more pressure sluices (2), in which the granular material mixture used for the blasting is caught and into which extends an inlet end (34) of the return line (10) which is connected to the blast pot (3), the outlet end (36) being situated in the lower region of the blast pot (3) or extending in the working process below the level of the blasting mixture held in the blast pot (3).

3. Device according to Claim 1, **characterized in that** the blasting space (1) has a first and a second sensor (8, 9) in the lower region, in particular in the region of the pressure sluices (2), the first or upper sensor (8) signaling the maximum permitted filling height and the second or lower sensor (9) signaling the minimum lower filling limit, while the blast pot (3) also has a third sensor (19) in the lower region and a fourth sensor (20) in the upper region, the fourth or upper sensor (20) signaling the maximum permitted filling height and the third or lower sensor (19) signaling the minimum filling limit for the suspension or the granular material mixture (35).

4. Device according to Claim 1, **characterized in that** a mixing apparatus, in particular a stirrer (12) which has a drive device (46) and which extends into the lower region of the blast pot (3), is provided in the blast pot (3), the lower region of the blast pot (3) tapering downward and being designed in particular with a funnel shape.

5. Device according to Claim 1, **characterized in that** a sludge separator, in particular a cyclone separator (26), is associated with the blast pot (3) and is connected to the blast pot (3) via a line (17) that has a valve, in particular a choke valve (50), or via a secondary circuit, and to the blasting space (1) via a return line (27).

6. Device according to Claim 1, **characterized in that** a line (72) with at least one valve (73) can be connected to the blast pot (3) so that, when the system is operating or starting up, air or - where necessary - water too is conveyed in this region.

7. Device according to Claim 1, **characterized in that** one or more blasting nozzles (24) are arranged at the outlet end of the line (21) and are designed as flat, oval and/or round nozzles.

8. Process for blast-machining with a device according to Claim 1, **characterized by** the following features:
a) When the system is operating, the collecting space, in particular the pressure sluice (2), holds at least as much suspension (35) as is emitted by the blasting nozzles (24) in one work cycle;
b) the pressure sluice (2) is provided beneath the blasting space (1) which tapers in a funnel shape and is equipped with a closable through opening, in particular a switchable valve (5);
c) the compressed air is introduced into the inside of the pressure sluice (2) via at least one compressedair inlet (44, 45) and via the through opening;
d) the return line (10) for returning the collected granular material mixture is situated in the lower region of the collecting space, in particular the pressure sluice (2), in which the inlet side (34) of the return line (10) is provided, via which return line (10) the suspension (35) or the granular material is conveyed back again into the blast pot (3) by excess or reduced pressure in the blasting space (1) or reduced pressure in the blast pot (3) and is there mixed and the suspension is formed from liquid and granular material;
e) the suspension is applied to the blasting space (1) via the line or the pressure pipe (21) and a valve or pinch valve (22) as well as the blasting nozzles (24).

9. Process for blast-machining with a device according to Claim 1, **characterized by** the following features:
a) the granular material and the liquid suspension (35) are prepared in the blast pot (3) depending on the operating state by the addition of liquid, in particular water;
b) the mixer (12) provided in the blast pot (3), in particular a static mixer or a stirrer with a drive device (46), loosens the granular material (35) collected in the lower region of the container of the blast pot (3);
c) the lower sensor (19) provided in the blast pot (3) and the upper sensor (20) control the filling state in the blast pot (3) and close or open the valve (44, 45) with or without a choke means for partial ventilation during the return of the suspension or the granular material from the blasting space or pressurized space (1) into the blast pot (3);
d) after the system has been switched to manual or automatic blasting, the collecting space, in particular the pressure sluice (2), is controlled in a cyclical operation via the closable through opening, in particular the switchable valve (44, 45), in such a way that, when a minimum level is reached in the collecting space, in particular in the pressure sluice (2), fresh water is supplied automatically to the blasting space (1) at a specified rhythm, in particular between 1 minute and approximately 3 minutes.

## Revendications

1. Dispositif (33) pour le traitement au jet abrasif ou le sablage d'objets, tels que des composants, des outils, des articles ménagers, des casseroles, des poêles ou similaires, comprenant un dépôt d'agent de sablage (3) destiné à recevoir un agent de sablage (35), en particulier des granulés, un mélange de granulés ou une suspension constituée de granulés et de liquide, lequel est connecté par le biais d'au moins une conduite d'agent sous pression (21) à une buse de sablage (24), laquelle s'étend dans une chambre de sablage (1), dans laquelle peuvent être introduits les objets à traiter par sablage, comprenant les caractéristiques suivantes :
a) un dispositif générateur de pression (43) pour introduire de l'air comprimé au-dessus de l'agent de sablage (35) prévu dans le dépôt d'agent de sablage (3) et pour presser l'agent de sablage dans la chambre de sablage ;
b) la conduite d'agent sous pression (21) est prévue pour transporter l'agent de sablage (35), son côté d'entrée (48) s'étendant au cours du processus de travail dans l'agent de sablage prévu dans le dépôt d'agent de sablage (3) sur lequel agit l'air comprimé, l'extrémité de sortie de la conduite d'agent sous pression (21) présentant une ou plusieurs buses de sablage (24) qui est ou sont placées dans la chambre de sablage (1) ;
c) une deuxième conduite (10) pour ramener l'agent de sablage (35) à l'aide de l'air comprimé hors de la chambre de sablage (1) dans le dépôt d'agent de sablage (3),
**caractérisé en ce que**
l'installation constituée de la chambre de sablage (1) et d'au moins le dépôt d'agent de sablage (3) est réalisée sous forme de système de pression fermé, qui est soumis à une pression de travail au cours du travail, laquelle agit au moins au cours du processus de travail sur l'agent de sablage, un dispositif de mélange avec des éléments conducteurs (52) étant prévu dans la région de la conduite d'agent sous pression (21) de la buse de sablage (24) ou dans ou avant l'ouverture d'entrée de la buse de sablage (24).

2. Dispositif selon la revendication 1,
**caractérisé en ce que**
la chambre de sablage (1) présente, dans sa région inférieure, une chambre collectrice, notamment un ou plusieurs sas de pression (2), dans laquelle le mélange de granulés utilisé pour le sablage est reçu et dans laquelle s'étend une extrémité d'entrée (34) de la conduite de retour (10), laquelle est en liaison avec le dépôt d'agent de sablage (3) et dont l'extrémité de sortie (36) se trouve dans la région inférieure du dépôt d'agent de sablage (3) ou s'étend au cours du processus de travail en dessous du niveau du mélange de sablage reçu dans le dépôt d'agent de sablage (3).

3. Dispositif selon la revendication 1,
**caractérisé en ce que**
la chambre de sablage (1) présente, dans la région inférieure, en particulier dans la région des sas de pression (2), un premier et un deuxième capteur (8, 9), le premier capteur, ou capteur supérieur (8), indiquant la hauteur de remplissage maximale admissible et le deuxième capteur, ou capteur inférieur (9), indiquant la limite de remplissage minimale inférieure, tandis que le dépôt d'agent de sablage (3) présente également dans la région inférieure un troisième capteur (19) et dans la région supérieure un quatrième capteur (20), le quatrième capteur, ou capteur supérieur (20), indiquant la hauteur de remplissage maximale admissible et le troisième capteur, ou capteur inférieur (19), indiquant la limite de remplissage minimale pour la suspension ou le mélange de granulés (35).

4. Dispositif selon la revendication 1,
**caractérisé en ce que**
dans le dépôt d'agent de sablage (3) est prévu un dispositif de mélange, en particulier un agitateur (12) avec un dispositif d'entraînement (46), qui s'étend jusque dans la région inférieure du dépôt d'agent de sablage (3), la région inférieure du dépôt d'agent de sablage (3) se rétrécissant vers le bas, notamment étant réalisée en forme d'entonnoir.

5. Dispositif selon la revendication 1,
**caractérisé en ce**
**qu'**un séparateur de boues, en particulier un séparateur à cyclone (26), est associé au dépôt d'agent de sablage (3), et est connecté par le biais d'une conduite (17) ou d'un circuit secondaire présentant une soupape, en particulier une soupape d'étranglement (50), au dépôt d'agent de sablage (3) et par le biais d'une conduite de retour (27) à la chambre de sablage (1).

6. Dispositif selon la revendication 1,
**caractérisé en ce**
**qu'**une conduite (72) ayant au moins une soupape (73) peut être raccordée au dépôt d'agent de sablage (3), de telle sorte que lors de la mise en service ou à l'état initial de l'installation, de l'air ou, si nécessaire, également de l'eau, puisse (nt) être acheminé (s) dans cette région.

7. Dispositif selon la revendication 1,
**caractérisé en ce**
**qu'**une ou plusieurs buses de sablage (24) sont disposées à l'extrémité de sortie de la conduite (21) et sont réalisées sous forme de buses plates, ovales et/ou rondes.

8. Procédé de traitement au jet abrasif comprenant un dispositif selon la revendication 1,
**caractérisé par** les caractéristiques suivantes :
a) lorsque l'installation fonctionne, la chambre collectrice, en particulier le sas de pression (2), reçoit au moins de la suspension (35) dans une même quantité qu'il en sort dans une passe de travail hors des buses de sablage (24) ;
b) le sas de pression (2) est prévu sous la chambre de sablage (1) se rétrécissant en forme d'entonnoir, laquelle est munie d'une ouverture de passage refermable, notamment d'une soupape commutable (5) ;
c) l'air comprimé est introduit par le biais d'au moins une entrée d'air comprimé (44, 45) et par le biais de l'ouverture de passage dans l'espace interne du sas de pression (2) ;
d) la conduite de retour (10) pour le retour du mélange de granulés accumulé se trouve dans la région inférieure de la chambre collectrice, en particulier du sas de pression (2), dans lequel le côté d'entrée (34) de la conduite de retour (10) est prévu, par le biais de laquelle conduite de retour la suspension (35) ou les granulés sont de nouveau ramenés par une surpression ou une dépression dans la chambre de sablage (1) ou par une dépression dans le dépôt d'agent de sablage (3) dans le dépôt d'agent de sablage (3) et y sont à nouveau mélangés, ou la suspension constituée de liquide et de granulés est formée ;
e) la chambre de sablage (1) est sollicitée avec la suspension par le biais de la conduite ou du tube de pression (21) et de la soupape ou de la soupape d'écrasement (22) ainsi que des buses de sablage (24).

9. Procédé de traitement au jet abrasif comprenant un dispositif selon la revendication 1,
**caractérisé par** les caractéristiques suivantes :
a) dans le dépôt d'agent de sablage (3), en fonction de l'état de fonctionnement, les granulés et la suspension liquide (35) sont préparés par ajout de liquide, notamment d'eau ;
b) le mélangeur (12) prévu dans le dépôt d'agent de sablage (3), en particulier le mélangeur statique ou l'agitateur avec le dispositif d'entraînement (46), détache les granulés (35) accumulés dans la région inférieure du récipient du dépôt d'agent de sablage (3) ;
c) le capteur inférieur (19) prévu dans le dépôt d'agent de sablage (3) et le capteur supérieur (20) contrôlent l'état de remplissage dans le dépôt d'agent de sablage (3) et ferment ou ouvrent la soupape (44, 45) avec ou sans dispositif d'étranglement pour une ventilation partielle pendant le transport de retour de la suspension ou des granulés hors de la chambre de sablage ou de la chambre de pression (1) dans le dépôt d'agent de sablage (3) ;
d) après la mise en marche de l'installation en mode de sablage manuel ou automatique, la chambre collectrice, notamment le sas de pression (2), est commandé(e) dans un mode cadencé par le biais de l'ouverture de passage refermable, notamment la soupape commutable (44, 45), de telle sorte qu'à l'obtention d'un niveau minimal dans la chambre collectrice, en particulier dans le sas de pression (2), de l'eau fraîche soit acheminée automatiquement à un rythme déterminé, notamment compris entre 1 min et environ 3 min, à la chambre de sablage (1).
